(19) Europäisches Patentamt
European Patent Office
Office européen des brevets

(11) **EP 3 036 840 B1**

(12) **FASCICULE DE BREVET EUROPEEN**

(45) Date de publication et mention de la délivrance du brevet:
**21.02.2018 Bulletin 2018/08**

(21) Numéro de dépôt: **14752820.2**

(22) Date de dépôt: **13.08.2014**

(51) Int Cl.:
*H04B 7/08* (2006.01)       *H04B 1/16* (2006.01)

(86) Numéro de dépôt international:
**PCT/EP2014/067292**

(87) Numéro de publication internationale:
**WO 2015/024827 (26.02.2015 Gazette 2015/08)**

(54) **PROCÉDÉ DE DÉTECTION D'UN SIGNAL ÉLECTROMAGNÉTIQUE PAR UN RÉSEAU ANTENNAIRE ET DISPOSITIF METTANT EN OEUVRE LE PROCÉDÉ**

VERFAHREN ZUR DETEKTION EINES ELEKTROMAGNETISCHEN SIGNALS DURCH EIN ANTENNENARRAY UND VORRICHTUNG ZUR DURCHFÜHRUNG DES VERFAHRENS

METHOD FOR THE DETECTION OF AN ELECTROMAGNETIC SIGNAL BY AN ANTENNA ARRAY, AND DEVICE IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2013 FR 1301973**

(43) Date de publication de la demande:
**29.06.2016 Bulletin 2016/26**

(73) Titulaire: **Thales**
**92400 Courbevoie (FR)**

(72) Inventeurs:
• **LE MEUR, Anne**
**F-78851 Elancourt Cedex (FR)**
• **DELABBAYE, Jean-Yves**
**F-78125 Vieille Eglise en Yvelines (FR)**

• **BOSSER, Luc**
**F-78851 Elancourt Cedex (FR)**

(74) Mandataire: **HAMMES, Pierre**
**Marks & Clerk France**
**Immeuble Visium**
**22, avenue Aristide Briand**
**94117 Arcueil Cedex (FR)**

(56) Documents cités:
**US-A1- 2005 259 621**

• **TAHERPOUR A ET AL: "Multiple antenna spectrum sensing in cognitive radios", IEEE TRANSACTIONS ON WIRELESS COMMUNICATIONS, IEEE SERVICE CENTER, PISCATAWAY, NJ, US, vol. 9, no. 2, 1 février 2010 (2010-02-01) , pages 814-823, XP011300984, ISSN: 1536-1276**

**Description**

L'invention concerne le domaine de la détection d'émissions radio électriques provenant, notamment, de radars ou de systèmes de télécommunication, et reçus par un réseau antennaire à diversité spatiale.

L'invention porte plus précisément sur un procédé de détection d'un signal électromagnétique par un réseau antennaire, notamment un réseau antennaire lacunaire, et un dispositif pour la mise en oeuvre dudit procédé.

Un problème à résoudre dans le domaine de la détection de signaux électromagnétiques réside dans la non connaissance a priori du type de signal intercepté, en particulier sa largeur de bande fréquentielle, le type de modulation utilisée ou plus généralement tout paramètre associé à la forme d'onde du signal.

Les méthodes de détection connues sont généralement construites sur la connaissance a priori de la forme du signal et utilisent un filtre adapté en fonction de cette connaissance.

Cependant, il n'est pas possible de mettre en oeuvre des filtres adaptés à tous les types de signaux attendus.

Deux grands types de récepteurs ont été envisagés jusqu'à présent pour réaliser une veille sur une très large bande de fréquences : les récepteurs couvrant en permanence la bande à veiller, qui sont adaptés pour ne détecter que les signaux de puissance élevée, et les récepteurs bande étroite, qui ne permettent pas de couvrir instantanément la bande totale mais qui s'attachent à détecter des signaux de puissance plus faible et qui permettent des analyses plus fines du signal.

La présente invention se place dans la perspective des récepteurs bande étroite.

Les méthodes traditionnelles de détection de signaux électromagnétiques sont notamment basées sur les étapes préalables suivantes.

La réception de signaux est faite par le biais d'un réseau antennaire à diversité spatiale, ou réseau interférométrique, et la démodulation du signal est réalisée par le même oscillateur local pour tous les capteurs du réseau. Le signal est ensuite échantillonné, sur chaque voie de réception, sous forme réelle ou complexe, puis un ou plusieurs bancs de filtres sont appliqués, par exemple par Transformée de Fourier Discrète pondérée. Autrement dit, on applique plusieurs Transformées de Fourier Discrètes décalées temporellement afin de réaliser une adaptation moyenne à la bande des signaux d'intérêt. A l'issue de cette opération, appelée analyse temps-fréquence, le signal est transformé en une grille temps-fréquence décomposée en cases temps-fréquences, chaque case contenant le résultat d'une transformée de Fourier discrète pour un intervalle temporel et un intervalle fréquentiel donnés.

Une méthode de détection connue consiste à comparer la puissance du signal, dans chaque case temps-fréquence, à un seuil de détection donné. Cependant cette prise de décision case par case n'est pas optimale lorsque le signal est étalé en temps et/ou en fréquence.

Il existe donc un problème à résoudre pour s'adapter à l'étalement du signal sur une pluralité de cases temps-fréquences.

On connaît par ailleurs des solutions basées sur la formation d'une voie unique à partir des signaux reçus par la pluralité d'éléments antennaires du réseau mais ces solutions ne sont performantes que pour des réseaux réguliers, autrement dit pour lesquels la distance entre deux éléments antennaires est régulière.

Il existe donc également un problème à résoudre pour concevoir une méthode de détection adaptée à un réseau lacunaire, c'est-à-dire un réseau pour lequel l'espacement entre deux éléments n'est pas régulier.

On connait également les techniques décrites dans les documents US 2005/0259621 et « TAHERPOUR A et AL : « Multiple antenna spectrum sensing in cognitive radios », IEEE transactions on wireless communications, IEEE service center, Piscataway, NJ,US, vol 9, n0 2, 1 février 2010 ».

L'invention propose une méthode et un système de détection de signaux électromagnétiques qui ne nécessitent pas de connaissance a priori du type de signal et qui peuvent être implémentés par le biais d'un réseau antennaire lacunaire.

L'invention est adaptée à la fois aux réseaux antennaires à mono-polarisation et à bipolarisation.

L'invention a ainsi pour objet un procédé de détection d'un signal électromagnétique, dit signal d'intérêt, susceptible d'être contenu dans un signal électromagnétique reçu par un réseau antennaire comprenant une pluralité d'éléments antennaires, ledit procédé comprenant les étapes suivantes :

- Appliquer audit signal électromagnétique reçu par chaque élément antennaire une pluralité de transformées temps-fréquence afin d'obtenir une représentation dudit signal sous la forme d'une pluralité de cases temps-fréquence contenant chacune le spectre dudit signal pour un intervalle fréquentiel et un intervalle temporel donnés,
- Pour chaque case temps/fréquence d'un ensemble de cases donné,

  ◦ Calculer l'énergie du vecteur composé des spectres sur l'ensemble des éléments antennaires,
  ◦ Appliquer la fonction non linéaire T suivante au résultat du calcul d'énergie précédent, de sorte à annuler les cases temps/fréquence ne contenant sensiblement que du bruit :

- Si la norme de l'énergie du vecteur des spectres est inférieure à un premier seuil prédéterminé s, le résultat de la fonction T est nul,
- Si la norme de l'énergie du vecteur des spectres est supérieure ou égale audit premier seuil s, le résultat de la fonction T est égal à la norme de l'énergie du vecteur des spectres moins la valeur dudit premier seuil s,

- Intégrer, sur ledit ensemble de cases temps/fréquence, le résultat de ladite fonction non linéaire T,
- Comparer le résultat de l'intégration à un second seuil prédéterminé, dit seuil de détection $S_{det}$, pour détecter la présence du signal d'intérêt.

Selon un aspect particulier de l'invention, lesdits éléments antennaires sont mono-polarisés.

Selon un autre aspect particulier de l'invention, lesdits éléments antennaires sont bipolarisés.

Dans le cas où lesdits éléments antennaires sont bipolarisés, l'étape de calcul d'énergie peut être réalisée sur le vecteur composé des spectres pour chacune des polarisations sur l'ensemble des éléments antennaires.

Dans le cas où lesdits éléments antennaires sont bipolarisés, le procédé selon l'invention peut comporter en outre les étapes suivantes :

- Calculer la matrice de covariance entre la pluralité de spectres associés à la pluralité d'éléments antennaires configurés selon une première polarisation et la pluralité de spectres associés à la pluralité d'éléments antennaires configurés selon une seconde polarisation,
- Calculer le vecteur propre associé à la plus grande valeur propre de ladite matrice de covariance,
- Dans l'étape de calcul d'énergie, remplacer le spectre par son produit scalaire avec ledit vecteur propre.

Dans le cas où lesdits éléments antennaires sont bipolarisés, les étapes de calcul de l'énergie des spectres, d'application de la fonction non linéaire T et d'intégration, sur une pluralité de cases temps/fréquences, du résultat de ladite fonction non linéaire T peuvent être réalisées séparément pour chaque polarisation desdits éléments antennaires, ledit procédé comprenant en outre une étape supplémentaire de détermination du maximum des résultats d'intégration sur les deux polarisations, ledit maximum étant comparé audit second seuil de détection.

Selon un autre aspect particulier de l'invention, ledit premier seuil s est déterminé en recherchant l'intersection entre l'axe des abscisses et l'asymptote à l'infini du logarithme du rapport de vraisemblance défini comme le quotient des densités de probabilités dans l'hypothèse où le signal d'intérêt est présent dans une case temps/fréquence et dans l'hypothèse où le signal d'intérêt est absent dans une case temps/fréquence.

Le premier seuil s peut être calculé en fonction d'un rapport signal à bruit donné et d'un paramètre q représentatif de la probabilité de présence du signal d'intérêt dans une case temps/fréquence.

Ledit paramètre q peut être choisi dans une plage comprise entre 0,1 et 1.

Selon un autre aspect particulier de l'invention, ledit second seuil de détection $S_{det}$ est configuré pour respecter une probabilité de fausse alarme donnée.

Selon un autre aspect particulier de l'invention, ledit réseau antennaire est lacunaire.

L'invention a également pour objet un dispositif pour la détection d'un signal électromagnétique, dit signal d'intérêt, susceptible d'être contenu dans un signal électromagnétique, ledit dispositif comprenant un réseau antennaire comprenant une pluralité d'éléments antennaires et des moyens configurés pour mettre en oeuvre le procédé selon l'invention.

D'autres caractéristiques et avantages de la présente invention apparaîtront mieux à la lecture de la description qui suit en relation aux dessins annexés qui représentent :

- La figure 1, un organigramme des étapes de mise en oeuvre du procédé de détection de signaux électromagnétiques selon l'invention,
- La figure 2a, un synoptique d'un dispositif pour la détection de signaux électromagnétiques pour un réseau lacunaire mono-polarisé selon un premier mode de réalisation,
- La figure 2b, un synoptique d'un dispositif pour la détection de signaux électromagnétiques pour un réseau lacunaire mono-polarisé, selon une variante du premier mode de réalisation,
- La figure 3a, un synoptique d'un dispositif pour la détection de signaux électromagnétiques pour un réseau lacunaire bipolarisé, selon un premier et un deuxième mode de réalisation,
- La figure 3b, un synoptique d'un dispositif pour la détection de signaux électromagnétiques pour un réseau lacunaire bipolarisé, selon un troisième mode de réalisation.

*Détection sur réseau antennaire à mono-polarisation*

L'invention est à présent décrite selon un premier mode de réalisation qui concerne les réseaux antennaires à mono-polarisation, autrement dit, les réseaux qui sont constitués d'éléments antennaires polarisés selon une unique polarisation.

Le procédé selon l'invention utilise les sorties du traitement d'analyse temps-fréquence, autrement dit les cases temps-fréquence, pour décider de la présence ou de l'absence d'un signal, en présence de bruit thermique qui est modélisé comme un signal aléatoire gaussien complexe centré de densité spectrale symétrique $N_0/2$ pour chacune de ses composantes réelles et imaginaires qui sont indépendantes entre elles.

Pour construire le détecteur, on utilise la théorie de la décision statistique, décrite notamment dans l'ouvrage « Testing Statistical Hypothesis, E. L. Lehmann, J.P. Romano, Springer 2005 » qui revient à tester la validité de l'un des deux modèles du signal reçu, autrement dit la présence, notée $H_1$, ou l'absence, notée $H_0$, du signal utile, de façon à optimiser le critère de Neyman-Pearson qui consiste à maximiser la probabilité de détection, sous la contrainte que la probabilité de fausse alarme est fixée.

Pour une taille de transformée de Fourier discrète donnée, nous allons tester l'hypothèse $H_1$ contre $H_0$ dans une fenêtre temps-fréquence constituée des sorties de plusieurs transformées de Fourier discrètes consécutives limitées à une bande donnée et à un intervalle de temps donné.

Les sorties en « temps » et en « fréquence » s'entendent vectoriellement, chacune des composantes provenant de l'un des P capteurs du réseau antennaire.

Pour ne pas compliquer inutilement les notations, nous désignerons par l'indice n la case « temps-fréquence » ainsi formée. Le signal utile étant bande étroite, il s'écrit toujours vectoriellement sous la forme suivante pour la case n : $Us_n$ où $s_n$ est la composante du signal utile démodulé, autrement dit son enveloppe complexe, projetée grâce à l'opération de transformée de Fourier discrète. U est un vecteur fixe pour une même menace dont les composantes traduisent les déphasages interférométriques pour un réseau d'antennes interférométrique.

Pour compléter la modélisation du signal utile, il faut donner des informations sur $s_n$, et cela représente une difficulté puisque dans le domaine de l'écoute, le signal est par définition inconnu. Or, c'est précisément en exploitant un modèle réaliste qu'il est possible de faire un progrès dans les performances. Compte-tenu des effets de filtrage, après les transformées de Fourier discrètes, le signal utile présent dans la case temps-fréquence n, $s_n$, est modélisé par un échantillon d'une variable aléatoire gaussienne complexe centrée à composantes indépendantes de variance commune $\sigma'^2$. Par ailleurs les différentes valeurs de $s_n$ sont considérées comme indépendantes. Tout ceci traduit un modèle peu contraignant qui ne fait aucune hypothèse de continuité de phase ou d'amplitude de façon à être valable pour toutes les modulations possibles.

On obtient le modèle suivant pour le signal reçu dans le cas où le signal utile est présent ($H_1$) et où il est absent ($H_0$) :

$$\begin{cases} H_1: & X_n = Us_n + W_n \\ H_0: & X_n = W_n \end{cases} ; \quad n = 1, 2, \dots N.$$

où $W_n$ est le bruit blanc numérique de matrice de covariance $2\sigma^2 I$ avec I la matrice identité de taille PxP. On suppose que la puissance du bruit $2\sigma^2$ est connue ou peut être estimée par ailleurs. Sans perte de généralité nous supposerons toujours dans la suite que U est normé, ce qui revient à changer la valeur de $\sigma'^2$ au besoin.

Pour compléter le modèle ci-dessus, dans l'hypothèse $H_1$, nous ajouterons que $s_n$ est présent sous la forme ci-dessus avec la probabilité q et absent avec la probabilité 1-q, et ceci de façon indépendante en n.

Ce modèle fait intervenir des paramètres inconnus : les directions $(\theta, \varphi)$ dans U, $\sigma'^2$, q.

Dans $H_1$, conditionnellement aux directions $(\theta, \varphi)$, et au fait que $s_n$ est différent de zéro:

$E(X_n X_n^* \mid \text{U}) = 2\sigma'^2 UU^* + 2\sigma^2 I$ où I désigne la matrice identité de dimension PxP où P est le nombre d'antennes, et où la notation X* désigne le transposé conjugué de X.

Si on considère l'ensemble des directions d'arrivées des cibles (ce qui revient à dire que l'on cherche à faire un détecteur bon en moyenne pour toutes les directions d'arrivée des cibles), la moyenne des termes $UU^*$ est proportionnelle à I.

On en déduit la covariance non conditionnelle dans $H_1$ : $E(X_n X_n^*) = \left(2\sigma'^2 + 2\sigma^2\right)I$. Le terme $2\sigma'^2$ « absorbe » le coefficient de proportionnalité entre $UU^*$ et I : pour ne pas compliquer les notations, on conserve le terme $2\sigma'^2$ plutôt que d'introduire un terme $2\sigma''^2$.

Et, dans $H_0$, $E(X_n X_n^*) = 2\sigma^2 I$

Dans l'hypothèse $H_1$, l'échantillon $X_n$ a pour densité de probabilité

$$p_1(X_n) = \frac{q}{\pi^P \left(2\left(\sigma'^2 + \sigma^2\right)\right)^P} . \exp\left(\frac{-X_n^* X_n}{2\left(\sigma'^2 + \sigma^2\right)}\right) + \frac{1-q}{\pi^P \left(2\sigma^2\right)^P} \left(\frac{-X_n^* X_n}{2\sigma^2}\right)$$

La densité de probabilité de la mesure $X_n$ dans l'hypothèse où il y a absence de signal est :

$$p_0(X_n) = \frac{1}{\pi^P \left(2\sigma^2\right)^P} . \exp\left(\frac{-X_n^* X_n}{2\sigma^2}\right)$$

Le rapport de vraisemblance $L(X_n)$ est le quotient des densités de probabilité dans les hypothèses $H_1$ et $H_0$.

$$L(X_n) = \frac{p_1(X_n)}{p_0(X_n)} = \frac{q.\sigma^{2P}}{(\sigma'^2 + \sigma^2)^P} . \exp\left(\frac{\sigma'^2 X_n^* X_n}{2\sigma^2 (\sigma'^2 + \sigma^2)}\right) + (1-q)$$

Pour déterminer le test de détection selon l'invention, on calcule le logarithme du rapport de vraisemblance pour toutes les mesures $X_n; n=1,2,...,N$ :

$$L\left(X_1, X_2,..., X_N; q, \sigma'^2\right) = \sum_{n=1}^{N} \ln p(q, X_n) - \ln p(0, X_n) = \sum_{n=1}^{N} \ln\left(q.a^P . \exp\left(b X_n^* X_n\right) + (1-q)\right)$$

avec

$$a = \frac{\sigma^2}{\left(\sigma'^2 + \sigma^2\right)} \text{ et } b = \frac{\sigma'^2}{2.\sigma^2 \left(\sigma'^2 + \sigma^2\right)}$$

en utilisant l'indépendance des mesures Xn.

Comme cette fonction dépend de deux paramètres inconnus q et $\sigma'^2$, on ne peut pas l'utiliser telle quelle comme dans la détection entre « hypothèses simples ». Selon l'invention, on optimise alors le fonctionnement du détecteur au voisinage du rapport signal à bruit K ; ce qui revient à fixer $\sigma'^2 = K \sigma^2$. Quant au paramètre q, on peut le fixer si l'on a une idée moyenne de l'occupation temps-fréquence du signal utile dans la fenêtre de détection.

La comparaison du rapport de vraisemblance $L(X_1, X_2,...X_N; q, \sigma'^2)$ à un seuil (détecteur optimal au sens du critère de Neyman-Pearson pour les valeurs de q et $\sigma'^2$ choisies), est équivalente à comparer à un seuil la fonction Tq :

$$\sum_{n=1}^{N} T_q\left(X_n^* X_n\right) = \sum_{n=1}^{N} \alpha L_n\left(X_n^* X_n\right) + \beta$$

où $\alpha > 0$ et $\beta$ réel.

On veut que le comportement asymptotique du détecteur soit celui du détecteur quadratique, ce qui se traduit par la relation $\lim_{\|X_n\|^2 \to \infty} \frac{T_q(X_n^* X_n)}{X_n^* X_n} = 1$. De plus on veut que quel que soit q, Tq(0) = 0 (ce qui signifie que lorsque le signal mesuré est nul, on impose que le critère soit nul).

Pour satisfaire ces contraintes, il faut choisir : $\alpha = 1/b$ et $\beta = -\alpha.\ln(q.a^P + 1-q)$ La fonction $T_q$ s'écrit donc :

$$T_q(X_n^* X_n) = \frac{1}{b} . \ln \frac{q.a^P . \exp(b X_n^* X_n) + (1-q)}{q.a^P + 1 - q} \quad (1)$$

La fonction $T_q$ est une fonction positive définie sur les réels positifs.

Quand q<1, $T_q(u)$ tend vers 0 quand u tend vers 0, et a pour asymptote la droite u-u$_0$ quand u tend vers +∞, avec

$$u_0 = -\frac{1}{b}\ln\frac{q.a^P}{q.a^P + 1 - q} \quad (2).$$

Pour q=1, on trouve exactement $T_q(u)=u$.

On peut assimiler le comportement de $T_q$ à deux droites (l'asymptote de $T_q$ en l'infini, et l'axe des abscisses), et ne conserver que ce comportement pour définir le détecteur h selon l'invention, ce qui revient à effectuer :

$$\sum_{n=1}^{N} h\left(\|X_n\|^2\right) > ou < seuil$$

où h(u)=0 pour $0 \leq u \leq u_0$ et h(u) = u-u$_0$ pour u > u$_0$, avec u$_0$ > 0 pour q< 1 et u$_0$=0 pour q=1.

Ce détecteur se compose donc d'une intégration incohérente spatialement ($\|X_n\|^2$), suivi d'une non-linéarité (fonction h) puis d'une intégration incohérente sur une fenêtre temps/fréquence $\left(\sum_{n=1}^{N}\right)$.

*Détection sur réseau antennaire à bipolarisation*

L'invention est à présent décrite selon un second mode de réalisation qui concerne les réseaux antennaires à bipolarisation, autrement dit, les réseaux qui sont constitués d'éléments antennaires polarisés selon deux polarisations différentes.

Pour une antenne à bipolarisation, le signal en sortie de transformée de Fourier discrète est modélisé de la façon suivante.

Après analyse spectrale, le signal mesuré à la case temps-fréquence d'indice n s'écrit, dans l'hypothèse H$_1$ (c'est-à-dire l'hypothèse où le signal est présent dans la case) :

$$H_1 : \begin{cases} z_{1n} & = & g_1.s_n + w_{1n} \\ z_{2n} & = & g_2.s_n + w_{2n} \end{cases} \text{ n =1,2, ...N}$$

$g_1$ et $g_2$ sont les gains complexes des deux antennes, qui dépendent de la polarisation.

Le signal $s_n$ est nul avec la probabilité 1-q et différent de 0 avec la probabilité q. $s_n$ est un échantillon d'une variable gaussienne complexe, centrée, de variance $2\sigma'^2$. Les échantillons $s_n$ sont indépendants d'une case temps-fréquence à une autre.

$2\sigma'^2$ étant la puissance totale du signal utile, on prend l'hypothèse, sans perte de généralité, que $|g_1|^2+|g_2|^2=1$ (usuellement on prend $g_1=\cos(\alpha)$ et $g_2=\sin(\alpha)e^{i\psi}$).

$w_{1n}, w_{2n}$ sont des bruits gaussiens, complexes, centrés, de même variance $2\sigma^2$, indépendants en n et entre eux.

Lorsque le signal est absent, on a le modèle H$_0$ suivant :

$$H_0 : \begin{cases} z_{1n} & = & w_{1n} \\ z_{2n} & = & w_{2n} \end{cases} \text{ n =1,2, ...N}$$

Lorsque $s_n$ est différent de 0, $(z_{1n}, z_{2n}) = z_n^T$ est un vecteur gaussien complexe, centré, de covariance :

$$R = \begin{pmatrix} |g_1|^2.2\sigma'^2+2\sigma^2 & 2g_1\overline{g_2}\sigma'^2 \\ 2\overline{g_1}g_2\sigma'^2 & |g_2|^2 2\sigma'^2+2\sigma^2 \end{pmatrix}$$

Dans la suite on note G le vecteur $(g_1 g_2)^T$ de sorte que $R=2\sigma'^2 GG^*+2\sigma^2 I$

Pour un réseau antennaire comprenant P éléments antennaires à bipolarisation, on en déduit les modèles suivants.

Lorsque le signal est présent on a le modèle $H_1$ :

$$H_1 : \begin{cases} z_{1pn} & = & g_1.e^{i\varphi_p} s_n + w_{1pn} \\ z_{2pn} & = & g_2.e^{i\varphi_p} s_n + w_{2pn} \end{cases} \quad n = 1,2,\ldots N$$

où $\varphi_p$ représente le déphasage géométrique de l'antenne p par rapport à un point choisi comme référence.

Lorsque le signal est absent, on a le modèle $H_0$ :

$$H_0 : \begin{cases} z_{1pn} & = & w_{1pn} \\ z_{2pn} & = & w_{2pn} \end{cases} \quad n = 1,2,\ldots N$$

On note maintenant :

$z_{p_n}$ la mesure n faite sur l'antenne p : $z_{pn} = (z_{1pn}, z_{2pn})^T$

$z_n$ l'ensemble des mesures d'indice n faites sur l'ensemble des P antennes : $z_n = (z_{11n}, z_{21n}, \ldots, z_{1pn}, z_{2pn})^T$

Lorsque $s_n \neq 0$, $z_{p_n}$ est un vecteur gaussien complexe, centré, de covariance :

$$R = \begin{pmatrix} |g_1|^2 .2\sigma'^2 + 2\sigma^2 & 2g_1 \overline{g_2} \sigma'^2 \\ 2\overline{g_1} g_2 \sigma'^2 & |g_2|^2 2\sigma'^2 + 2\sigma^2 \end{pmatrix}$$

Pour P antennes à bipolarisation, si on suppose les mesures indépendantes d'une antenne à bipolarisation à une autre (ce qui revient à faire un détecteur bon en moyenne dans toutes les directions d'arrivée et renoncer à faire une détection optimisée en fonction d'une direction d'arrivée donnée), alors dans l'hypothèse $H_1$ le vecteur de mesures $(z_{11n}, z_{21n}, \ldots, z_{1Pn}, z_{2Pn})^T$ a pour matrice de covariance non conditionnée :

$$\Re = \begin{pmatrix} R & & & & \\ & R & & & \\ & & \ldots & & \\ & & & R & \\ & & & & R \end{pmatrix}$$

C'est une matrice bloc-diagonale ; elle a donc les propriétés suivantes :

$$\det \Re = (\det R)^P$$

$$\Re^{-1} = \begin{pmatrix} R^{-1} & & & & \\ & R^{-1} & & & \\ & & \ldots & & \\ & & & R^{-1} & \\ & & & & R^{-1} \end{pmatrix}$$

On décrit à présent le détecteur mis en oeuvre, selon l'invention, pour un réseau antennaires comprenant P éléments à bipolarisation. L'invention s'applique notamment pour des réseaux lacunaires à bipolarisation dans lesquels les centres de phase des voies de réception des deux polarisations d'une même antenne sont confondus.

Dans l'hypothèse $H_0$, le signal complexe $z_n$ a pour densité de probabilité :

$$p_0(z_n) = \frac{1}{\pi^{2P}(2\sigma^2)^{2P}} \exp\left(-\frac{\|z_n\|^2}{2\sigma^2}\right)$$

Dans l'hypothèse $H_1$, le signal complexe $z_n$ a pour densité de probabilité :

$$p_1(z_n) = \frac{q}{\pi^{2P}\det\mathfrak{R}}\exp(-z_n^*\mathfrak{R}^{-1}z_n) + \frac{1-q}{\pi^{2P}(2\sigma^2)^{2P}}\exp\left(-\frac{\|z_n\|^2}{2\sigma^2}\right)$$

$$= \frac{q}{\pi^{2P}(\det R)^P}\exp\left(-\sum_{p=1}^{P}z_{pn}^*R^{-1}z_{pn}\right) + \frac{1-q}{\pi^{2P}(2\sigma^2)^{2P}}\exp\left(-\frac{\|z_n\|^2}{2\sigma^2}\right)$$

On obtient après calculs :

$$R^{-1} = \frac{1}{2\sigma^2}I - \frac{2\sigma'^2\|G\|^2}{2\sigma^2(2\sigma'^2\|G\|^2 + 2\sigma^2)}\Gamma\Gamma^*, \text{ où } \Gamma = G/\|G\|$$

Des équations précédentes on déduit le rapport de vraisemblance

$$\mathsf{L}_n: L_n = \frac{p_1(z_n)}{p_0(z_n)} = \frac{q(2\sigma^2)^{2P}}{(\det R)^P}\exp\left(\frac{2\sigma'^2\|G\|^2}{2\sigma^2(2\sigma'^2\|G\|^2 + 2\sigma^2)}\sum_{p=1}^{P}|\Gamma^*z_{pn}|^2\right) + 1 - q$$

Le détecteur optimal au sens du critère de Neyman-Pearson (pour les valeurs de q et $\sigma'^2$ choisies), est équivalent à comparer à un seuil la fonction ln $L(z_1,z_2,...z_N;q,\sigma'^2,\Gamma) = \sum_{n=1}^{N}\ln p_1(z_n) - \ln p_0(z_n)$, qui dépend de trois paramètres inconnus : $\Gamma$, $\sigma'^2$ et q, où $\sigma'^2$ est la puissance du signal utile, q est la proportion de signal utile à l'intérieur de la fenêtre analysée, et $\Gamma$ est le vecteur propre de R associé à la plus grande valeur propre de R.

En effet $R = 2\sigma'^2 GG^* + 2\sigma^2 I$, donc : $R.G = (2\sigma'^2\|G\|^2 + 2\sigma^2).G$,

G, et aussi $\Gamma = G/\|G\|$, sont donc vecteurs propres de la matrice R associés à la valeur propre $2\sigma'^2\|G\|^2 + 2\sigma^2$.

La deuxième valeur propre de R vaut $trR - (2\sigma'^2\|G\|^2 + 2\sigma^2) = 2\sigma^2$.

$\Gamma$ est donc vecteur propre de R associé à la plus grande valeur propre de R.

Dans le cas où q=1, $L(z_n;q,\sigma'^2,\Gamma)$ se simplifie en :

$$L(z_n;\sigma'^2,\Gamma) = \frac{(2\sigma^2)^{2P}}{(\det R)^P}\exp\left(\frac{2\sigma'^2\|G\|^2}{2\sigma^2(2\sigma'^2 + 2\sigma^2)}\sum_{p=1}^{P}|\Gamma^*z_{pn}|^2\right),$$

que l'on peut mettre sous la forme : $g_{\sigma,\sigma'}\left(\sum_{p=1}^{P}|\Gamma^*z_{pn}|^2\right)$ où $g_{\sigma,\sigma'}(.)$ est la fonction définie par

$$g_{\sigma,\sigma'}(u) = \frac{(2\sigma^2)^{2P}}{(\det R)^P}\exp\left(\frac{2\sigma'^2\|G\|^2 u}{2\sigma^2(2\sigma'^2 + 2\sigma^2)}\right)$$ est monotone croissante.

Par conséquent la famille $p_1(z_n)$, indexée par $\sigma'$, est une fonction à rapport de vraisemblance monotone pour la fonction

$$\left(\sum_{p=1}^{P}\left|\Gamma^* z_{pn}\right|^2\right).$$ Donc le test $$\left(\sum_{p=1}^{P}\left|\Gamma^* z_{pn}\right|^2\right)$$ supérieur ou inférieur à un seuil est un test Uniformément Plus Puissant (UPP), connu du domaine par exemple dans l'ouvrage « Testing Statistical Hypothesis », E.L. Lehmann, J.P. Romano, Springer 2005 ». Cela signifie que quelle que soit la valeur du paramètre inconnu $\sigma^i$, et pour une probabilité de fausse alarme fixée, le test a une probabilité de détection (puissance du test) supérieure à celle de tout autre test.

Quand on dispose de N mesures le test devient :

$$\sum_{n=1}^{N}\left(\sum_{p=1}^{P}\left|\Gamma^* z_{pn}\right|^2\right)$$ supérieur ou inférieur à un seuil

r étant inconnu, il doit être estimé.

Comme q = 1, il est possible de calculer analytiquement l'estimée de $\Gamma$ au sens du maximum de vraisemblance, $\hat{\Gamma}_{MV}$.

$\hat{\Gamma}_{MV}$ est la valeur de $\Gamma$ qui maximise $\prod_{n=1}^{N}L(z_n).$ Or quand q=1, $\prod_{n=1}^{N}L(z_n)$ est égal à $\exp\left(\sum_{n=1}^{N}\sum_{p=1}^{P}\left|\Gamma^* z_n\right|^2\right)$, à un terme multiplicatif près $\left(\dfrac{4\sigma^4}{\det R}\right)^P = \left(\dfrac{2\sigma^2}{2\sigma'^2\|G\|^2 + 2\sigma^2}\right)^P$, qui est indépendant de $\Gamma$ car $\|G\|$=1.

Donc :

$$\prod_{n=1}^{N}L(z_n) \text{ maximum} \qquad <=> \qquad \sum_{n=1}^{N}\sum_{p=1}^{P}\left|\Gamma^* z_{pn}\right|^2 \text{ maximum} \qquad <=>$$

$$\sum_{n=1}^{N}\sum_{p=1}^{P}\Gamma^* z_{pn} z_{pn}^* \Gamma \text{ maximum} <=> \Gamma^*\left(\sum_{n=1}^{N}\sum_{p=1}^{P} z_{pn} z_{pn}^*\right)\Gamma \text{ maximum}$$

<=> $\Gamma^*\hat{R}\Gamma$ maximum où $\hat{R}$ est la matrice de covariance empirique des mesures.

Cela revient à maximiser la grandeur $Z=\Gamma^*\hat{R}\Gamma-\lambda(\Gamma^*\Gamma-1)$, car $\Gamma$ est normalisé.

En dérivant Z par rapport à $\Gamma^*$ on obtient : $\partial Z/\partial\Gamma^*=\hat{R}.\Gamma-\lambda\Gamma=0$.

Le maximum de Z est donc atteint lorsque $\Gamma$ est pris égal au vecteur propre associé à la plus grande valeur propre de la matrice de covariance empirique.

Quand q=1, $\hat{\Gamma}_{MV}$ est donc le vecteur propre associé à la plus grande valeur propre de la matrice de covariance empirique.

Le test obtenu en remplaçant $\Gamma$ par $\hat{\Gamma}_{MV}$ dans $\sum_{n=1}^{N}\left(\sum_{p=1}^{P}\left|\Gamma^* z_{pn}\right|^2\right)$ est le test dit du GLRT (Generalized Likelihood Ratio Test) connu du domaine, par exemple via l'ouvrage « Detection, Estimation and Modulation », H.L. van Trees, Wiley 1968.

La méthode du GLRT, qui est souvent proposée lorsqu'il n'existe pas de test uniformément plus puissant, n'est cependant pas applicable lorsque le paramètre q est différent de 1 car le rapport de vraisemblance $\prod_{n=1}^{N}L(z_n)$ est une loi de mélange (somme de densités de probabilités pondérées par q et 1-q), ce qui rend délicate voire impossible sa résolution analytique.

Quand q est différent de 1, l'invention propose, comme pour les réseaux mono-polarisation, d'optimiser le fonctionnement du détecteur au voisinage d'un rapport signal à bruit et d'un coefficient q fixés.

Pour $\Gamma$, on conserve le même estimateur que précédemment et on prend pour $\hat{\Gamma}$ la valeur propre maximum associée à la matrice $\hat{R}=\dfrac{1}{N}\sum_{n=1}^{N}\sum_{p=1}^{P}z_{pn}z_{pn}^*$ Cela est justifié par la relation : $\hat{R}=\dfrac{1}{N}\sum_{n=1}^{N}\sum_{p=1}^{P}z_{pn}z_{pn}^* = qR+2\sigma^2 I$ auquel s'additionnent des termes centrés en $1/\sqrt{N}$ La relation précédente montre que $\hat{\Gamma}$ est aussi vecteur propre de $\hat{R}$ associé

à sa plus grande valeur propre : en effet la matrice I a pour valeur propre 1 et admet n'importe quel vecteur propre, donc tout vecteur propre de R (associé à la valeur propres $\lambda$) est aussi vecteur propre de $\hat{R}$ (associé à la valeur propre $q\lambda+2\sigma^2$). Cet estimateur n'est pas le maximum de vraisemblance, mais il possède les mêmes propriétés que le maximum de vraisemblance : il est non biaisé et sa covariance est en 1/N.

$$\sum_{n=1}^{N} \ln L(z_n) > ou < seuil$$

On utilise donc la structure du test de Neyman-Pearson en prenant pour estimateur de $\Gamma$ le vecteur propre de la matrice de covariance empirique, associé à sa plus grande valeur propre, et en choisissant un point de fonctionnement pour les autres paramètres $\sigma'^2$ et q.

Les performances du détecteur sont inchangées si le test est changé en :

$$\sum_{n=1}^{N} T_q(z_n) = \sum_{n=1}^{N} \left( \alpha \ln L(z_n) + \beta \right) > ou < seuil$$

avec $\alpha > 0$ et $\beta$ réel.

On choisit $\alpha$ et $\beta$ tels que le comportement asymptotique du détecteur soit celui du détecteur quadratique, c'est-à-dire que $\alpha L(z_n) + \beta \approx \sum_{p=1}^{P} \left| \Gamma^* z_{pn} \right|^2 / 2\sigma^2$ pour $\sum_{p=1}^{P} \left| \Gamma^* z_{pn} \right|^2 \rightarrow \infty$. De plus on veut que pour tout q, $T_q(0)=0$, ce qui signifie que lorsque le signal mesuré est nul, on veut que le critère soit nul. Ces deux conditions imposent :

$$\begin{cases} \alpha \ln\left[ q\left(\dfrac{4\sigma^4}{\det R}\right)^P + 1 - q \right] + \beta = 0 \\ \\ \alpha \dfrac{2\sigma'^2 \|G\|^2}{2\sigma'^2 \|G\|^2 + 2\sigma^2} = 1 \end{cases}$$

d'où l'on obtient :

$$\alpha = \frac{2\sigma'^2 \|G\|^2 + 2\sigma^2}{2\sigma'^2 \|G\|^2}$$

et

$$\beta = -\frac{2\sigma'^2 \|G\|^2 + 2\sigma^2}{2\sigma'^2 \|G\|^2} \ln\left[ q\left(\frac{4\sigma^4}{\det R}\right)^P + 1 - q \right]$$

Or

$$\|G\| = 1$$

Donc:

$$\alpha = \frac{2\sigma'^2 + 2\sigma^2}{2\sigma'^2} \text{ et } \beta = -\frac{2\sigma'^2 + 2\sigma^2}{2\sigma'^2} \ln\left[ \frac{q(2\sigma^2)^{2P}}{(\det R)^P} + 1 - q \right]$$

Avec les notations définies ci-dessus, la caractéristique du détecteur devient :

$$T_q(Z_n) = \alpha \ln\left[\frac{q\gamma e^{Z_n/\alpha} + 1 - q}{1 + q\gamma - q}\right]$$

avec

$$Z_n = \sum_{p=1}^{P}\left|\Gamma^* z_{pn}\right|^2 / 2\sigma^2 \quad \text{et} \quad \gamma = \left(\frac{4\sigma^4}{\det R}\right)^P = \frac{1}{\left(1 + \frac{\sigma'^2}{\sigma^2}\right)^P}$$

On propose d'approcher la caractéristique du détecteur par deux droites :

$$Z_n \to \infty : y = x + \alpha \ln\left(\frac{q\gamma}{q\gamma + 1 - q}\right)$$

* son asymptote en

* la droite : y=0 (la pente à l'origine n'est pas nulle donc cette droite n'est pas l'asymptote de $T_q$ en 0)

Elle devient donc :

$$\sum_{fenêtre} T_q(Z_n)$$

Où:

$$\begin{cases} T_q(Z_n) = 0 & quand & Z_n \leq s \\ T_q(Z_n) = Z_n - s & quand & Z_n \geq s \end{cases}$$

et où s est défini par le point d'intersection de l'axe des abscisses avec l'asymptote en +∞.

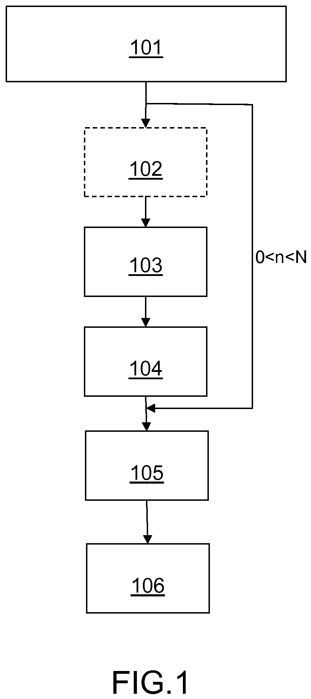

On décrit à présent, à l'appui de l'organigramme de la figure 1, les étapes de mise en oeuvre des différents modes de réalisation de l'invention.

Dans une première étape 101, commune à tous les modes de réalisation de l'invention, une transformation temps-fréquence est appliquée aux signaux reçus sur chaque élément antennaire du réseau. Plus précisément, on applique pour chaque signal, plusieurs transformées de Fourier discrètes, décalées temporellement, afin d'obtenir une représentation temps fréquence du signal sous la forme d'une grille de cases temps-fréquence contenant chacune le spectre du signal pour un intervalle fréquentiel et un intervalle temporel donné.

On décrit à présent la suite des étapes du procédé selon un premier mode de réalisation qui concerne les réseaux antennaires à mono-polarisation.

On note $x_{n,j}$ la valeur spectrale obtenue pour la case temps-fréquence d'indice n mesuré pour l'élément antennaire d'indice j, appelée par la suite « spectre ». On note $X_n$ le vecteur composé des spectres de la case temps-fréquence d'indice n mesurés pour tous les éléments antennaires du réseau.

Dans une deuxième étape 103, on calcule la somme quadratique des spectres $x_{n,j}$, autrement dit la norme au carré du vecteur $X_n$ :

$$\|X_n\|^2 = X_n^* X_n = \sum_{j=1}^{Pcapteurs} x_{n,j}^* x_{n,j}$$

ou encore l'énergie du signal $X_n$.

Dans une troisième étape 104, on applique la fonction non linéaire $T_q$ au résultat de la deuxième étape 103 afin d'éliminer les cases temps-fréquence supposées ne contenir que du bruit.

$$\begin{cases} T_q\left(X_n^* X_n\right) = 0 & quand \quad X_n^* X_n \le s \\ T_q\left(X_n^* X_n\right) = X_n^* X_n - s & quand \quad X_n^* X_n \ge s \end{cases}$$

Le seuil s est déterminé en recherchant l'intersection entre l'axe des abscisses et l'asymptote à l'infini du logarithme du rapport de vraisemblance approximé par la fonction $T_q$ donnée par la relation (1). Une expression de la valeur du seuil s est donnée par la relation (2).

Cette relation dépend du rapport signal à bruit et du paramètre q représentatif de la probabilité de présence du signal dans une case temps-fréquence.

Pour calculer le seuil s, le rapport signal à bruit est fixé à un point de fonctionnement donné, dépendant notamment de l'application visée.

Pour un rapport signal à bruit plus fort que le point de fonctionnement fixé, le détecteur est désadapté mais cela ne pose pas de problème car le signal est plus facilement détectable qu'au point de fonctionnement pour lequel l'algorithme est réglé. Pour un rapport signal à bruit plus faible que le point de fonctionnement fixé, le détecteur est désadapté mais on considère que les signaux correspondants ne sont pas d'intérêt.

La valeur du paramètre q est fixée le plus proche possible de la valeur 0, sans être nulle, de sorte à se placer dans un cas où le signal a une faible probabilité d'être présent. Le détecteur selon l'invention est optimisé pour cette valeur de q. Si la valeur de q réelle est supérieure à la valeur de q choisie, le rapport signal à bruit moyen $q\sigma^2/\sigma^2$ est plus élevé et donc le seuil de détection sera plus facilement franchi. Si la valeur réelle de q est inférieure à la valeur de q choisie, le rapport signal à bruit moyen est plus faible mais on considère que cette situation ne présente pas d'intérêt. En pratique, une valeur de q égale à 0.1 peut être retenue car en dessous de cette valeur, la probabilité de présence du signal est trop faible pour constituer un cas réaliste.

Dans une quatrième étape 105, le résultat de l'étape précédente 104 est intégré sur l'ensemble des cases temps-fréquence de la fenêtre sélectionnée.

Enfin, dans une dernière étape 106, le résultat de l'intégration 105 est comparé à un seuil de détection $S_{det}$ prédéterminé pour en déduire la présence ou l'absence de signal.

Le seuil de détection $S_{det}$ est déterminé par expérimentation de sorte à fixer une probabilité de fausse alarme donnée.

Dans un second mode de réalisation, le procédé de détection selon l'invention peut également être appliqué pour un réseau antennaire à bipolarisation.

Dans ce cas le procédé selon l'invention comporte une étape supplémentaire 102 qui consiste à calculer la matrice de covariance empirique 2x2 sur les PxN mesures d'une fenêtre où P est le nombre d'éléments antennaires à bipolarisation et N le nombre de cases temps-fréquence de la fenêtre :

$$\hat{R} = \begin{pmatrix} \sum_{n=1}^{N}\sum_{p=1}^{P} z_{1pn}^* z_{1pn} & \sum_{n=1}^{N}\sum_{p=1}^{P} z_{1pn}^* z_{2pn} \\ \sum_{n=1}^{N}\sum_{p=1}^{P} z_{2pn}^* z_{1pn} & \sum_{n=1}^{N}\sum_{p=1}^{P} z_{2pn}^* z_{2pn} \end{pmatrix}$$

On détermine ensuite le vecteur propre $\hat{\Gamma}$ associé à la plus grande valeur propre de $\hat{R}$. Le vecteur propre $\hat{\Gamma}$ peut être déterminé, par exemple, en diagonalisant au préalable la matrice $\hat{R}$.

L'étape 103 est alors remplacée par le calcul, pour chaque case temps-fréquence d'indice n, de la somme

$$Z_n = \sum_{p=1}^{P} \left| \hat{\Gamma}^* z_{pn} \right|^2 .$$

Cela revient à former la voie sur laquelle le rapport signal à bruit est maximum.

Les étapes 104,105,106 suivantes sont appliquées de la même façon que pour le cas du réseau mono-polarisation en remplaçant la puissance du signal $X_n$ par la somme $Z_n$.

Selon une variante du second mode de réalisation décrit ci-dessus, un axe de simplification possible consiste à considérer que la matrice de covariance R est une matrice diagonale. Cela revient à supposer qu'il y a incohérence des signaux reçus, non seulement d'un élément antennaire à un autre, mais aussi entre les deux voies, polarisées différemment, d'un même élément antennaire. Le détecteur selon l'invention devient alors quadratique en polarisation et sur les voies de réception. Cette variante est applicable que les centres de phase des deux sous-réseaux soient co-localisés ou non.

Dans ce cas, l'étape 102 devient optionnelle et le procédé est identique au cas du réseau à mono-polarisation en remplaçant, dans l'étape 103, la puissance du signal $X_n$ par celle du signal constitué des spectres $z_{pn}$ pour une case

$$Z_n = \sum_{p=1}^{P} \left\| z_{pn} \right\|^2 .$$

temps-fréquence n donnée

Cette variante présente un intérêt notamment lorsque la puissance du signal reçue est similaire pour les deux polarisations. Dans ce cas, l'invention permet de transformer le gain d'intégration incohérent sur les P voies de réception d'un réseau à mono-polarisation en un gain d'intégration incohérent sur les 2P voies du réseau à bipolarisation.

Un avantage de cette variante est qu'elle offre une plus grande facilité d'implémentation au prix d'une dégradation acceptable des performances de sensibilité du au fait que le gain d'intégration en polarisation n'est plus un gain d'intégration cohérent.

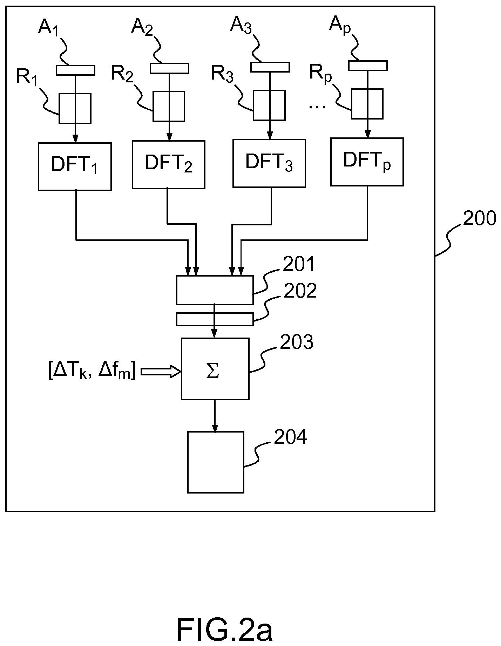

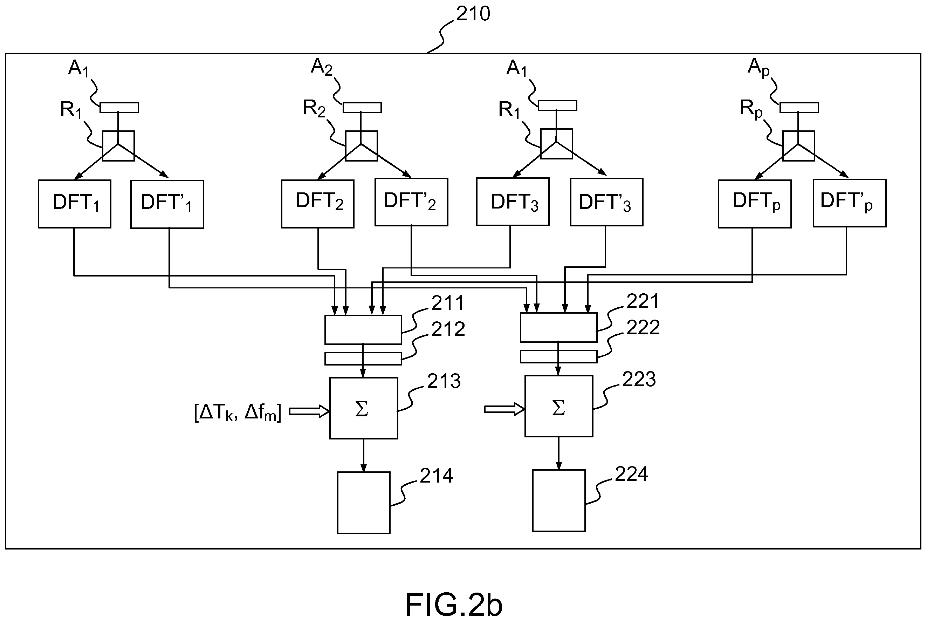

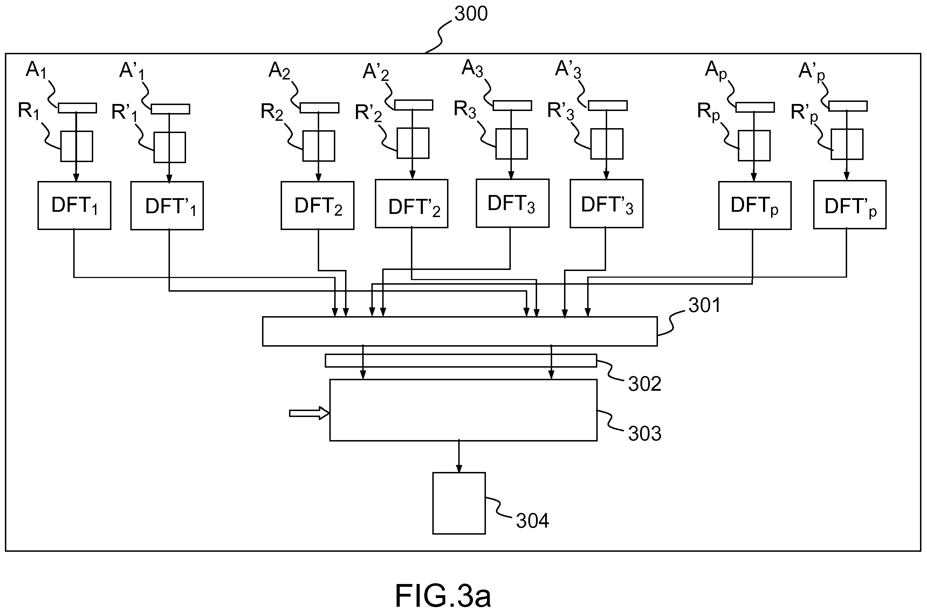

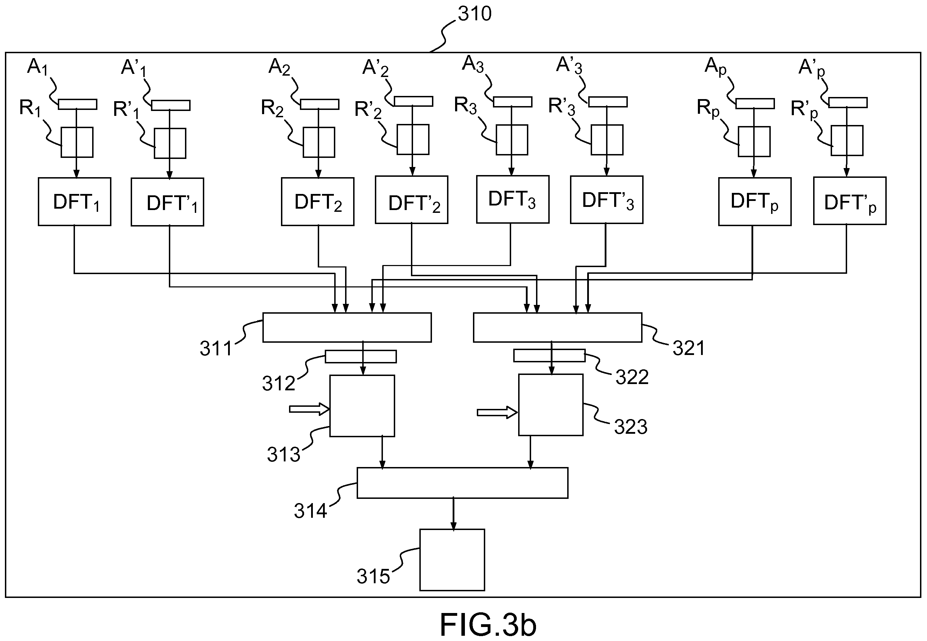

Les figures 2a,2b,3a,3b schématisent, sur plusieurs synoptiques, le dispositif de détection de signaux électromagnétiques selon plusieurs modes de réalisation de l'invention.

La figure 2a décrit un dispositif de détection selon un premier mode de réalisation de l'invention appliqué à un réseau antennaire à mono-polarisation.

Le dispositif 200 décrit à la figure 2a comprend un réseau antennaire composé d'une pluralité d'éléments antennaires ou capteurs $A_1,A_2,A_3...A_P$ à mono-polarisation. Chaque élément antennaire est couplé à une voie de réception $R_1,R_2,R_3...R_P$ pour, notamment, numériser le signal analogique reçu par chaque capteur. En sortie de chaque voie de réception, une transformée temps-fréquence $DFT_1$, $DFT_2$, $DFT_3$, $DFT_P$ est appliquée, par le biais d'une ou plusieurs transformées de Fourier discrètes décalées temporellement. Pour chaque voie de réception, cette opération aboutit à la construction d'une grille de cases temps-fréquences contenant chacune le spectre du signal pour un intervalle temporel et un intervalle fréquentiel donnés.

Le dispositif 200 de détection comprend également un premier module 201 de calcul pour effectuer la somme quadratique, en chaque case, des spectres en sortie de chaque transformée temps-fréquence. Autrement dit, le module de calcul 201 est configuré pour exécuter l'étape 103 du procédé de détection selon l'invention.

Le dispositif 200 de détection comprend également un deuxième module 202 de calcul configuré pour appliquer l'étape de non linéarité 104 du procédé selon l'invention, un troisième module 203 de calcul pour réaliser une intégration, conformément à l'étape 105 du procédé selon l'invention, de la sortie du deuxième module 202 sur une fenêtre temps-fréquence $[\Delta T_k, \Delta f_m]$ qui comporte un nombre donné de cases temps-fréquence. Enfin, un dernier module de calcul 204 est configuré pour comparer le résultat de l'intégration opérée par le troisième module 203 à un seuil de détection prédéterminé et à produire une information sur la présence ou l'absence de signal dans la fenêtre temps-fréquence $[\Delta T_k, \Delta f_m]$.

La figure 2b schématise une variante du dispositif de détection de la figure 2a selon laquelle, pour chaque voie de réception $R_1,R_2,R_3...R_P$, deux types de transformées de Fourier discrète sont appliquées avec deux résolutions fréquentielles différentes. Dans ce cas, les modules de calcul 201-204 décrits pour la figure 2a sont dupliqués pour chaque résolution fréquentielle. Un avantage de disposer de plusieurs types de transformées de Fourier discrètes est que cela permet d'augmenter la probabilité qu'il y ait une largeur de filtre adaptée à la bande du signal à traiter.

La figure 3a représente un synoptique d'un dispositif de détection 300 selon l'invention applicable pour un réseau antennaire à bipolarisation.

Un tel dispositif 300 comprend une pluralité d'éléments antennaires aptes à fonctionner selon deux polarisations distinctes. Pour une voie donnée, un élément antennaire à bipolarisation $A_1,A'_1$ peut être constitué de deux éléments distincts ou d'un élément unique configuré pour fonctionner selon deux polarisations distinctes.

Le dispositif 300 comporte une voie de réception $R_1,R'_1...R_P,R'_P$ et une transformée temps-fréquence $DFT_1,DFT'_1,...DFT_P,DFT'_P$ pour chaque élément antennaire et chaque polarisation.

Le dispositif 300 comporte également plusieurs modules de calcul 301,302,303,304 configurés pour exécuter les étapes 102 à 106 de mise en oeuvre du procédé de détection de signaux électromagnétiques selon l'invention.

Tout comme pour le dispositif à monopolarisation décrit à la figure 2b, le dispositif à bipolarisation peut également mettre en oeuvre pour chaque voie de réception $R_1,R_2,R_3...R_P$, deux types de transformées de Fourier discrète avec deux résolutions fréquentielles différentes.

La figure 3b représente une variante de réalisation du dispositif de la figure 3a, selon laquelle chaque polarisation est traitée séparément en sortie des transformées temps-fréquence. Un premier module de calcul 311 est configuré pour exécuter l'étape 103 du procédé selon l'invention pour les signaux reçus selon une première polarisation. Un deuxième module de calcul 321 est configuré pour exécuter l'étape 103 du procédé selon l'invention pour les signaux reçus selon une seconde polarisation.

Un troisième module de calcul 312 est configuré pour exécuter l'étape 104 de non linéarité du procédé selon l'invention pour les signaux reçus selon une première polarisation. Un quatrième module de calcul 322 est configuré pour exécuter l'étape 104 de non linéarité du procédé selon l'invention pour les signaux reçus selon une seconde polarisation.

Deux modules 313, 323 distincts réalisent l'intégration des sorties des modules 312, 322 sur une fenêtre temps-fréquence donnée. Un module supplémentaire 314 est utilisé pour comparer les sorties des deux intégrateurs 313, 323 et retenir la sortie qui présente la valeur la plus élevée. Cette dernière valeur est comparée au seuil de détection via un module de comparaison 315.

La variante de réalisation représentée à la figure 3b est notamment intéressante lorsque la puissance du signal n'est pas équilibrée sur les deux sous-réseaux constitués chacun des éléments antennaires configurés selon une polarisation donnée.

Cette variante revient à appliquer le procédé selon l'invention, tel que décrit pour le cas d'un réseau à mono-polarisation, à chacun des deux sous-réseaux fonctionnant en mono-polarisation puis à ne conserver que le maximum des résultats de détection fournis sur les deux sous réseaux. Cette variante est applicable que les centres de phase des deux sous réseaux soient co-localisés ou non.

Dans les différentes variantes de réalisation du dispositif de détection de signaux électromagnétiques selon l'invention, les modules de calcul peuvent être agencés selon différentes architectures, en particulier chaque étape du procédé peut être implémentée par un module distinct ou au contraire l'ensemble des étapes peuvent être regroupées au sein d'un module de calcul unique.

Chacun des modules de calcul que comporte le dispositif selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

**Revendications**

1. Procédé de détection d'un signal électromagnétique, dit signal d'intérêt, susceptible d'être contenu dans un signal électromagnétique reçu par un réseau antennaire comprenant une pluralité d'éléments antennaires, ledit procédé comprenant les étapes suivantes :

    - Appliquer audit signal électromagnétique reçu par chaque élément antennaire une pluralité de transformées temps-fréquence (101) afin d'obtenir une représentation dudit signal sous la forme d'une pluralité de cases temps-fréquence contenant chacune le spectre dudit signal pour un intervalle fréquentiel et un intervalle temporel donnés,
    - Pour chaque case temps/fréquence d'un ensemble de cases donné,

        ∘ Calculer (103) l'énergie du vecteur composé des spectres sur l'ensemble des éléments antennaires,
        ∘ Appliquer (104) la fonction non linéaire T suivante au résultat du calcul d'énergie précédent, de sorte à annuler les cases temps/fréquence ne contenant sensiblement que du bruit :

            ▪ Si la norme de l'énergie du vecteur des spectres est inférieure à un premier seuil prédéterminé s, le résultat de la fonction T est nul,
            ▪ Si la norme de l'énergie du vecteur des spectres est supérieure ou égale audit premier seuil s, le résultat de la fonction T est égal à la norme de l'énergie du vecteur des spectres moins la valeur dudit premier seuil s,

    - Intégrer (105), sur ledit ensemble de cases temps/fréquence, le résultat de ladite fonction non linéaire T,
    - Comparer (106) le résultat de l'intégration à un second seuil prédéterminé, dit seuil de détection $S_{det}$, pour détecter la présence du signal d'intérêt.

2. Procédé de détection d'un signal électromagnétique selon la revendication 1 dans lequel lesdits éléments antennaires sont monopolarisés.

3. Procédé de détection d'un signal électromagnétique selon la revendication 1 dans lequel lesdits éléments antennaires sont bipolarisés.

4. Procédé de détection d'un signal électromagnétique selon la revendication 3 dans lequel l'étape (103) de calcul d'énergie est réalisée sur le vecteur composé des spectres pour chacune des polarisations sur l'ensemble des éléments antennaires.

# EP 3 036 840 B1

**5.** Procédé de détection d'un signal électromagnétique selon la revendication 4 dans lequel il comporte en outre les étapes suivantes :

- Calculer (102) la matrice de covariance entre la pluralité de spectres associés à la pluralité d'éléments antennaires configurés selon une première polarisation et la pluralité de spectres associés à la pluralité d'éléments antennaires configurés selon une seconde polarisation,
- Calculer (102) le vecteur propre associé à la plus grande valeur propre de ladite matrice de covariance,
- Dans l'étape de calcul d'énergie (103), remplacer le spectre par son produit scalaire avec ledit vecteur propre.

**6.** Procédé de détection d'un signal électromagnétique selon la revendication 3 dans lequel les étapes de calcul de l'énergie des spectres (103), d'application de la fonction non linéaire T (104) et d'intégration (105), sur une pluralité de cases temps/fréquences, du résultat de ladite fonction non linéaire T sont réalisées séparément pour chaque polarisation desdits éléments antennaires, ledit procédé comprenant en outre une étape supplémentaire de détermination du maximum des résultats d'intégration sur les deux polarisations, ledit maximum étant comparé audit second seuil de détection.

**7.** Procédé de détection d'un signal électromagnétique selon l'une des revendications précédentes dans lequel ledit premier seuil s est déterminé en recherchant l'intersection entre l'axe des abscisses et l'asymptote à l'infini du logarithme du rapport de vraisemblance défini comme le quotient des densités de probabilités dans l'hypothèse (H1) où le signal d'intérêt est présent dans une case temps/fréquence et dans l'hypothèse (H0) où le signal d'intérêt est absent dans une case temps/fréquence.

**8.** Procédé de détection d'un signal électromagnétique selon la revendication 7 dans lequel ledit premier seuil s est calculé en fonction d'un rapport signal à bruit donné et d'un paramètre q représentatif de la probabilité de présence du signal d'intérêt dans une case temps/fréquence.

**9.** Procédé de détection d'un signal électromagnétique selon la revendication 8 dans lequel ledit paramètre q est choisi dans une plage comprise entre 0,1 et 1.

**10.** Procédé de détection d'un signal électromagnétique selon l'une des revendications précédentes dans lequel ledit second seuil de détection $S_{det}$ est configuré pour respecter une probabilité de fausse alarme donnée

**11.** Procédé de détection d'un signal électromagnétique selon l'une des revendications précédentes dans lequel ledit réseau antennaire est lacunaire.

**12.** Dispositif (200,210,300,310) pour la détection d'un signal électromagnétique, dit signal d'intérêt, susceptible d'être contenu dans un signal électromagnétique, ledit dispositif comprenant un réseau antennaire comprenant une pluralité d'éléments antennaires ($A_1,..A_P$) et des moyens (201,202,203,204) configurés pour mettre en oeuvre le procédé selon l'une des revendications 1 à 11.

## Patentansprüche

**1.** Verfahren zur Erkennung eines elektromagnetischen Signals, Signal von Interesse genannt, das in einem elektromagnetischen Signal enthalten sein kann, das von einem Antennenarray empfangen wird, das eine Vielzahl von Antennenelementen aufweist, wobei das Verfahren die folgenden Schritte umfasst:

- Anwenden einer Vielzahl von Zeit-Frequenz-Transformationen (101) auf das von jedem Antennenelement empfangene elektromagnetische Signal, um eine Darstellung des Signals in Form einer Vielzahl von Zeit-Frequenz-Feldern zu erhalten, die jeweils das Spektrum des Signals für ein gegebenes Frequenzintervall und Zeitintervall enthält,
- für jedes Zeit-/Frequenzfeld einer gegebenen Gesamtheit von Feldern,

  ∘ Berechnen (103) der Energie des Vektors, der sich aus den Spektren über die Gesamtheit der Antennenelemente zusammensetzt,
  ∘ Anwenden (104) der folgenden nichtlinearen Funktion T auf das Ergebnis der vorherigen Leistungsberechnung, um die Zeit-/Frequenzfelder zu löschen, die im Wesentlichen nur Rauschen enthalten:

- wenn der Energiestandard des Spektralvektors kleiner als ein vorgegebener erster Schwellenwert s ist, ist das Ergebnis der Funktion T gleich Null,
- wenn der Energiestandard des Spektralvektors größer oder gleich dem ersten Schwellenwert s ist, ist das Ergebnis der Funktion T gleich dem Energiestandard des Spektralvektors minus dem Wert des ersten Schwellenwerts s,

- Integrieren (105) des Ergebnisses der nichtlinearen Funktion T in die Gesamtheit von Zeit-/Frequenzfeldern,
- Vergleichen (106) des Integrationsergebnisses mit einem zweiten vorbestimmten Schwellenwert, der Erkennungsschwellenwert $S_{det}$ genannt, um das Vorhandensein des Signals von Interesse zu erkennen.

2. Verfahren zur Erkennung eines elektromagnetischen Signals nach Anspruch 1, wobei die Antennen monopolarisiert sind.

3. Verfahren zur Erkennung eines elektromagnetischen Signals nach Anspruch 1, wobei die Antennen bipolarisiert sind.

4. Verfahren zur Erkennung eines elektromagnetischen Signals nach Anspruch 3, wobei der Energieberechnungsschritt (103) auf dem Vektor durchgeführt wird, der aus Spektren für jede der Polarisationen auf der Gesamtheit der Antennenelementen zusammengesetzt ist.

5. Verfahren zur Erkennung eines elektromagnetischen Signals nach Anspruch 4, wobei es ferner die folgenden Schritte umfasst:

- Berechnen (102) der Kovarianzmatrix zwischen der Vielzahl von Spektren, die mit der Vielzahl von Antennenelementen assoziiert sind, die gemäß einer ersten Polarisation konfiguriert sind, und der Vielzahl von Spektren, die mit der Vielzahl von Antennenelementen assoziiert sind, die gemäß einer zweiten Polarisation konfiguriert sind,
- Berechnen (102) des Eigenvektors, der mit dem größten Eigenwert der Kovarianzmatrix assoziiert ist,
- Ersetzen des Spektrums durch sein skalares Produkt mit dem Eigenvektor in dem Energieberechnungsschritt (103).

6. Verfahren zur Erkennung eines elektromagnetischen Signals nach Anspruch 3, wobei die Schritte der Energieberechnung der Spektren (103), des Anwendens der nichtlinearen Funktion T (104) und der Integration (105), über eine Vielzahl von Zeit-/Frequenzfeldern, des Ergebnisses der nichtlinearen Funktion T getrennt für jede Polarisation der Antennenelemente durchgeführt werden, wobei das Verfahren des Weiteren einen zusätzlichen Schritt des Bestimmens des Maximums der Integrationsergebnisse auf den beiden Polarisationen umfasst, wobei das Maximum mit dem zweiten Erkennungsschwellenwert verglichen wird.

7. Verfahren zur Erkennung eines elektromagnetischen Signals nach einem der vorhergehenden Ansprüche, wobei der erste Schwellenwert s bestimmt wird, indem nach dem Schnittpunkt zwischen der Abszissenachse und der Asymptote bei Unendlich des Logarithmus des Wahrscheinlichkeitsverhältnisses gesucht wird, der als der Quotient von Wahrscheinlichkeitsdichten in der Hypothese (H1) definiert ist, in der das Signal von Interesse in einem Zeit-/Frequenzfeld vorhanden ist und in der Hypothese (H0), in der das Signal von Interesse in einem Zeit-/Frequenzfeld fehlt.

8. Verfahren zur Erkennung eines elektromagnetischen Signals nach Anspruch 7, wobei der erste Schwellenwert s als Funktion eines gegebenen Signal-Rausch-Verhältnisses und eines Parameters q berechnet wird, der die Wahrscheinlichkeit des Vorhandenseins des Signals von Interesse in einem Zeit-/Frequenzfeld repräsentiert.

9. Verfahren zur Erkennung eines elektromagnetischen Signals nach Anspruch 8, wobei der Parameter q in einem Bereich von 0,1 bis 1 ausgewählt wird.

10. Verfahren zur Erkennung eines elektromagnetischen Signals nach einem der vorhergehenden Ansprüche, wobei der zweite Erkennungsschwellenwert $S_{det}$ konfiguriert ist, um eine gegebene Fehlalarmwahrscheinlichkeit einzuhalten.

11. Verfahren zur Erkennung eines elektromagnetischen Signals nach einem der vorhergehenden Ansprüche, wobei das Antennenarray mangelhaft ist.

12. Vorrichtung (200, 210, 300, 310) zur Erkennung eines elektromagnetischen Signals, wobei das Signal von Interesse in einem elektromagnetischen Signal enthalten sein kann, wobei die Vorrichtung ein Antennenarray umfasst, das eine Vielzahl von Antennenelementen ($A_1$,..$A_P$) und Mittel (201, 202, 203, 204) umfasst, die konfiguriert sind, um den Prozess nach einem der Ansprüche 1 bis 11 auszuführen.

**Claims**

1. Method for detecting an electromagnetic signal, called a signal of interest, capable of being contained in an electromagnetic signal received by an antenna array comprising a plurality of antenna elements, the method comprising the following steps:

   - applying to the electromagnetic signal received by each antenna element a plurality of time/frequency transforms (101) in order to obtain a representation of the signal in the form of a plurality of time/frequency cells each containing the spectrum of the signal for a given frequency range and a given time range,
   - for each time/frequency cell of a given set of cells,

     ○ calculating (103) the energy of the vector composed of the spectrums over all of the antenna elements,
     ○ applying (104) the following non-linear function T to the result of the preceding energy calculation in order to cancel the time/frequency cells which contain substantially only noise:

       ▪ if the norm of the energy of the vector of the spectrums is less than a first predetermined threshold s, the result of the function T is zero,
       ▪ if the norm of the energy of the vector of the spectrums is greater than or equal to the first threshold s, the result of the function T is equal to the norm of the energy of the vector of the spectrums less the value of the first threshold s,

   - integrating (105), over all of the time/frequency cells, the result of the non-linear function T,
   - comparing (106) the result of the integration with a second predetermined threshold, called the detection threshold $S_{det}$, in order to detect the presence of the signal of interest.

2. Method for detecting an electromagnetic signal according to claim 1, in which the antenna elements are mono-polarised.

3. Method for detecting an electromagnetic signal according to claim 1, in which the antenna elements are bi-polarised.

4. Method for detecting an electromagnetic signal according to claim 3, in which the step (103) of calculating energy is carried out on the vector composed of spectrums for each of the polarisations over all of the antenna elements.

5. Method for detecting an electromagnetic signal according to claim 4, in which it further comprises the following steps:

   - calculating (102) the covariance matrix between the plurality of spectrums associated with the plurality of antenna elements which are configured according to a first polarisation and the plurality of spectrums associated with the plurality of antenna elements which are configured according to a second polarisation,
   - calculating (102) the eigenvector associated with the largest eigenvalue of the covariance matrix,
   - in the energy calculation step (103), replacing the spectrum with the scalar product thereof with the eigenvector.

6. Method for detecting an electromagnetic signal according to claim 3, in which the steps of calculating the energy of the spectrums (103), of applying the non-linear function T (104) and integrating (105), over a plurality of time/frequency cells, the result of the non-linear function T are carried out separately for each polarisation of the antenna elements, the method further comprising an additional step of determining the maximum of the integration results over the two polarisations, the maximum being compared with the second detection threshold.

7. Method for detecting an electromagnetic signal according to any one of the preceding claims, in which the first threshold s is determined by searching for the intersection between the abscissa axis and the asymptote at infinity of the logarithm of the ratio of probability defined as the quotient of the probability densities in the hypothesis (H1), where the signal of interest is present in a time/frequency cell, and in the hypothesis (H0), where the signal of interest is absent from a time/frequency cell.

8. Method for detecting an electromagnetic signal according to claim 7, in which the first threshold s is calculated as a function of a given signal-to-noise ratio and a parameter q which is representative of the probability of the presence of the signal of interest in a time/frequency cell.

9. Method for detecting an electromagnetic signal according to claim 8, in which the parameter q is selected from a range between 0.1 and 1.

10. Method for detecting an electromagnetic signal according to any one of the preceding claims, in which the second detection threshold $S_{det}$ is configured to comply with a given probability of a false alarm.

11. Method for detecting an electromagnetic signal according to any one of the preceding claims, in which the antenna array is incomplete.

12. Device (200, 210, 300, 310) for the detection of an electromagnetic signal, called a signal of interest, capable of being contained in an electromagnetic signal, the device comprising an antenna array which comprises a plurality of antenna elements ($A_1,..A_p$) and means (201, 202, 203, 204) which are configured to implement the method according to any one of claims 1 to 11.

FIG.1

FIG.2a

FIG.2b

FIG.3a

FIG.3b

EP 3 036 840 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050259621 A

**Littérature non-brevet citée dans la description**

- Multiple antenna spectrum sensing in cognitive radios. **TAHERPOUR A et al.** IEEE transactions on wireless communications. IEEE service center, 01 Février 2010, vol. 9
- **E. L. LEHMANN ; J.P. ROMANO.** Testing Statistical Hypothesis. Springer, 2005
- **E.L. LEHMANN, J.P ; ROMANO.** Testing Statistical Hypothesis. Springer, 2005
- **H.L. VAN TREES.** Detection, Estimation and Modulation. Wiley, 1968